# FASCICULE DE BREVET EUROPEEN

(11) **EP 1 705 412 B1**
(45) Date de publication et mention de la délivrance du brevet: **30.04.2008**
(21) Numéro de dépôt: 06354010.8
(22) Date de dépôt: 17.03.2006
(51) Int. Cl.: F16K 31/04

(54) **Actionneur linaire sécurisé**
Gesicherter Linearantrieb
Secure linear actuator

(30) Priorité: 22.03.2005 FR 0502822
(43) Date de publication de la demande: 27.09.2006
(73) Titulaire: Crouzet Automatismes, 26000 Valence (FR)
(72) Inventeur: Coyac, Cyrille Schneider Electric Industries SAS, 38050 Grenoble Cedex 09 (FR); Julia, David Schneider Electric Industries SAS, 38050 Grenoble Cedex 09 (FR)
(74) Mandataire: Tripodi, Paul

(56) Documents cités:
- EP-A- 0 512 139
- EP-A- 0 623 989
- WO-A-20/04099669
- DE-A1- 3 941 444

## Description

### DOMAINE TECHNIQUE DE L'INVENTION

L'invention est relative à un actionneur linéaire sécurisé comprenant une tige de commande mobile ayant une première extrémité destinée à être reliée à un clapet d'une vanne, et une seconde extrémité reliée à un noyau mobile par un ensemble vis-écrou, la tige de commande bloquée en rotation étant libre de se déplacer selon un axe longitudinal de référence. L'actionneur linéaire comprend un moteur ayant un rotor fixe en translation selon l'axe longitudinal de référence et étant destiné à faire déplacer la tige de commande via le noyau mobile. Le noyau mobile est entraîné en rotation par le rotor et peut se déplacer suivant l'axe longitudinal de référence, le rotor ayant une partie avant côté clapet et une partie arrière côté noyau mobile. L'actionneur linéaire comprend des moyens de guidage en rotation de la partie avant du rotor, un ressort de fermeture tendant à éloigner le noyau mobile du rotor selon l'axe longitudinal de référence, un électroaimant destiné à maintenir accolé le noyau mobile à la partie arrière du rotor, et une cloche de contention enveloppant le rotor, le ressort de fermeture, le noyau mobile et l'ensemble vis-écrou.

### ETAT DE LA TECHNIQUE ANTERIEURE

De nombreux brevets WO 2004/099669,EP0623989, EP0512139, W002070936 décrivent des actionneurs linéaires pour lesquels, une rupture d'alimentation électrique entraîne un retour automatique de l'axe de commande dans une position stable de repos. Généralement, ce produit est appelé « actionneur linéaire sécurisé ».

Ce type d'actionneur est notamment destiné à une vanne de gaz de chaudières dans laquelle l'actionneur linéaire, muni d'un clapet, assure la régulation du débit de gaz. Une rupture d'alimentation électrique entraîne la fermeture automatique du clapet et la coupure du gaz. L'utilisation de ce produit peut être étendue à toutes les applications nécessitant un retour automatique à une position initiale.

Les actionneurs linéaires traditionnels sont constitués d'un ensemble rotor ayant une partie avant guidée par un roulement à billes dans un carter. Ce roulement à billes assure le positionnement et le guidage en rotation du rotor pendant son fonctionnement. Cet ensemble rotor est monté dans une enveloppe emboutie en inox appelée « cloche de contention » permettant de réaliser l'étanchéité de la vanne vis à vis de l'extérieur. Pour éviter les oscillations du rotor lors du fonctionnement, ce dernier est généralement aussi guidé sur l'arrière dans un logement cylindrique créé sur la cloche. Le logement cylindrique et le roulement assurent donc la fonction de palier nécessaire à une rotation correcte du rotor autour de son axe de révolution.

Dans les actionneurs linéaires sécurisés, il est parfois difficile de réaliser dans la cloche de contention un logement cylindrique pour le guidage arrière du rotor. En effet, du fait de la présence d'éléments mobiles utilisés pour le retrait automatique de l'axe de commande, les volumes dans la cloche de contention ne sont plus exploitables pour positionner le logement cylindrique.

L'utilisation d'un guidage unique du rotor par un roulement à billes est certes envisageable mais peu satisfaisante d'un point de vue mécanique. En effet, il subsiste toujours un degré de liberté au niveau du roulement ce qui permet au rotor d'osciller par rapport à son axe de révolution. Les frottements résultant des oscillations excessives, réduisent les performances du système et sont responsables d'un niveau sonore non acceptable pour certaines applications.

Par ailleurs, la température intérieure du produit en fonctionnement varie de -15°C à + 120°C. Ces fortes variations de température peuvent entraîner la déformation mécanique de certains composants et provoquer ainsi le blocage du rotor de l'actionneur linéaire.

### EXPOSE DE L'INVENTION

L'invention vise donc à remédier aux inconvénients de l'état de la technique, de manière à proposer un actionneur linaire sécurisé comportant un guidage en rotation satisfaisant et étant de réalisation simple.

La partie arrière du rotor de l'actionneur linéaire sécurisé selon l'invention est guidée en rotation dans la cloche de contention au moyen d'un segment de guidage ouvert, de forme annulaire non refermée comprenant une fente, positionné sur ladite partie arrière. Le diamètre externe dudit segment est sensiblement égal au diamètre interne de la cloche et le diamètre interne du segment de guidage est sensiblement supérieur au diamètre externe de la partie arrière du rotor sur laquelle il est positionné, de manière à laisser un jeu résiduel entre la rotor et la cloche de contention.

De préférence, le diamètre externe du segment de guidage à l'état libre est supérieur au diamètre interne de la cloche de contention.

Dans un mode particulier de réalisation, le segment de guidage est positionné à l'intérieur d'une gorge de maintien.

De préférence, la gorge de maintien est placée au niveau de la partie arrière du rotor.

Avantageusement, la partie arrière du rotor comporte un noyau fixe dans lequel est placée la gorge de maintien.

Avantageusement, le noyau fixe forme avec le noyau mobile, le noyau magnétique de l'électroaimant.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente, en coupe, un dispositif d'actionnement linéaire sécurisé selon un mode de réalisation préférentiel de l'invention dans une position fermée et débrayée ;
- la figure 2 représente, en coupe, le dispositif d'actionnement linéaire sécurisé selon un mode de réalisation préférentiel de l'invention dans une position fermée et armée ;
- la figure 3 représente, en coupe, le dispositif d'actionnement linéaire sécurisé selon un mode de réalisation préférentiel de l'invention dans une position ouverte et armée.
- la figure 4 représente une vue détaillée de l'ensemble rotor selon la figure 1.
- La figure 5 représente un détail de réalisation d'un segment de guidage selon la figure 1.

### DESCRIPTION DETAILLEE D'UN MODE DE REALISATION

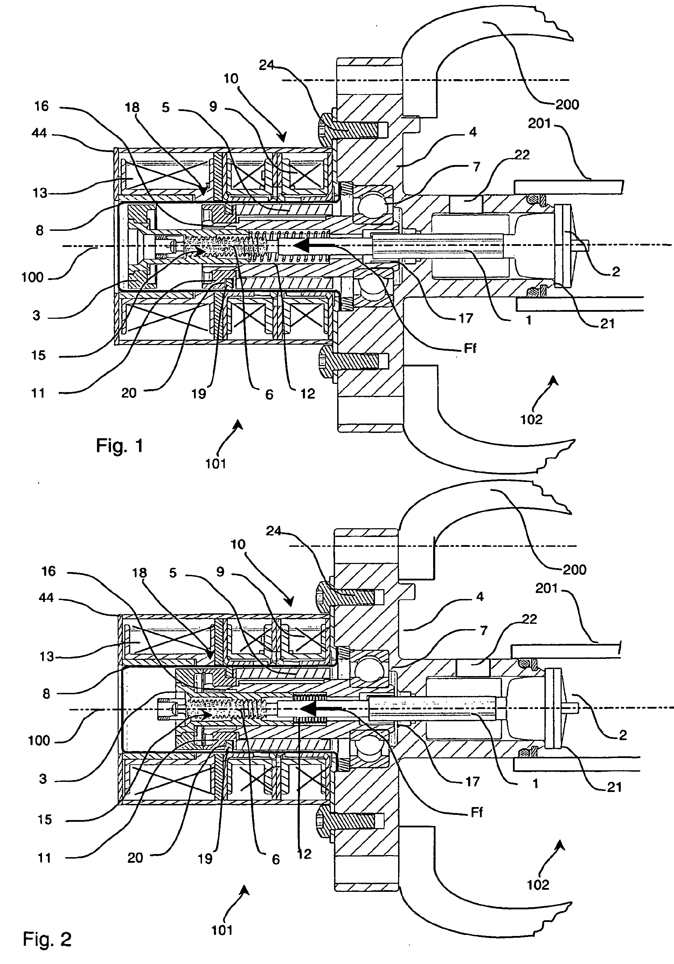

En référence à la figure 1, un actionneur linéaire selon un mode préférentiel de réalisation comprend une tige de commande 1 ayant une première extrémité destinée à être reliée notamment à un clapet 2 et une seconde extrémité reliée à un noyau mobile 3. Des cannelures 17 bloquent en rotation la tige de commande 1 par rapport au carter 4. La tige de commande 1 est libre de se déplacer en translation selon un axe longitudinal de référence 100.

A titre d'exemple d'application, l'actionneur linéaire sécurisé est destiné à commander une vanne de gaz d'une chaudière. L'actionneur linéaire sécurisé peut être monté sur un corps de vanne de gaz 200. Le clapet 2 placé sur la première extrémité de la tige de commande 1 peut se déplacer en translation entre une position de fermeture et une position d'ouverture. Le clapet 2 libre en translation selon un axe longitudinal de référence 100, est bloqué en rotation par rapport à la bride 21. Suivant la position du clapet 2 dans un conduit 201, le gaz pourra circuler, plus ou moins rapidement, via une ouverture 22 de l'actionneur.

La seconde extrémité de la tige de commande 1 comporte une zone filetée male 6 qui vient s'insérer dans une partie cylindrique creuse du noyau mobile 3. Le noyau mobile 3 et la seconde extrémité 6 de la tige de commande 1 constituent un ensemble vis-écrou 15. Compte tenu de cette liaison mécanique entre la tige de commande et le noyau mobile 3, le noyau mobile 3 peut aussi se déplacer en translation suivant l'axe longitudinal de référence 100.

La tige de commande 1, l'ensemble vis-écrou 15 et une partie du noyau mobile 3 peuvent se déplacer à l'interieur d'un rotor 5 d'un moteur électrique 10. L'axe de rotation du rotor est sensiblement confondu avec l'axe longitudinal de référence 100.

Le mouvement rotatif du rotor peut entraîner en rotation le noyau mobile 3 grâce à la présence de cannelures 16 placées entre le rotor et le noyau mobile 3. Ledit noyau est fixe en rotation par rapport au rotor 5 qui l'entraîne mais reste libre en translation par rapport à ce même rotor.

La partie avant du rotor 5 est reliée au carter 4 et est guidée en rotation par un roulement à billes 7. Le rotor 5 est alors bloqué en translation selon l'axe longitudinal de référence 100. La partie arrière du rotor 5 comporte un noyau fixe 11. Le noyau fixe 11 est fixé au rotor 5 et est donc entraîné en rotation par ce dernier.

L'ensemble formé par le rotor 5, le noyau fixe 11 et le noyau mobile 3 est monté dans une enveloppe métallique emboutie appelée par la suite la cloche de contention 8. La cloche de contention 8, fixée au carter 4 permet de réaliser l'étanchéité entre l'interieur 102 du corps de vanne 200 et l'exterieur 101. Le stator 9 du moteur électrique 10 est positionné autour de la cloche de contention 8 et est enveloppé d'un capot 44 relié au carter 4 par des moyens de fixation 24 tels que des vis.

Un ressort de fermeture 12 de type hélicoïdal est placé à l'interieur du rotor, son axe longitudinal étant sensiblement aligné avec l'axe longitudinal de référence 100. En outre, le diamètre interne du ressort de fermeture 12 est supérieur au diamètre externe de la portion de la tige de commande 1 entourée par ledit ressort.

Le ressort de fermeture comporte une première extrémité en appui sur la partie avant du rotor 5 et une seconde extrémité en appui sur le noyau mobile 3. Le ressort de fermeture 12, travaillant en compression, exerce une force de fermeture Ff qui tend à éloigner le noyau mobile 3 du noyau fixe 11 du rotor 5. Autrement dit, le noyau mobile 3 tend à se déplacer vers l'arrière de la cloche de contention 8 sous l'action de la force de fermeture Ff. La force de fermeture Ff tend à séparer le noyau mobile 3 du noyau fixe 11. Le déplacement du noyau mobile 3 entraîne concomitamment celui de l'axe de commande mobile 1 compte tenu que ces deux éléments sont reliés via l'ensemble vis-écrou 15. En outre, ce mouvement tend à placer le clapet 2 dans une position de fermeture en appui sur la bride 21 du carter 4.

Un électroaimant 13 est placé sur la partie arrière de la cloche 8. L'électroaimant 13 possède deux noyaux magnétiques composés par le noyau fixe 11 et le noyau mobile 3. Par ailleurs, le circuit magnétique de l'électroaimant 13 est constitué principalement de deux pièces en acier ferromagnétique distantes l'une de l'autre de sorte à créer un entrefer 18. Le noyau mobile 3 et le noyau fixe 11 sont placés dans cet entrefer 18 de telle sorte que le flux magnétique généré par la bobine 13 puisse traverser lesdits noyaux.

Lorsque le noyau mobile 3 est en contact avec le noyau fixe 11, la force électromagnétique produite par l'électroaimant 13, est alors destinée à maintenir accolés ces deux noyaux malgré la force de fermeture Ff exercée par le ressort de fermeture 12.

Pour limiter les risques de blocage entre la partie arrière du rotor 5 et la cloche de contention 8, et permettre au rotor 5 de tourner librement à l'interieur de la cloche, la partie arrière du rotor 5 est guidée en rotation dans la cloche de contention 8 au moyen d'un segment de guidage 19 annulaire ouvert. Ce segment de forme sensiblement torique ne se referme pas et une fente 33 est alors observée. De préférence, ce segment est réalisé en matériau plastique.

A l'état libre, autrement dit avant son montage sur le rotor, le segment de guidage 19 comporte un diamètre externe légèrement supérieur au diamètre interne de la cloche de contention de contention 8.

Selon un mode préférentiel de réalisation de l'invention, le segment de guidage 19 est positionné dans une gorge de maintien 20 placée sur la partie arrière du rotor, de préférence sur le pourtour du noyau fixe 11. Lors de l'assemblage final du rotor 5 dans la cloche 8, le segment de guidage 19 se resserre légèrement pour venir s'ajuster au diamètre interne de la cloche de contention 8. Un jeu résiduel situé entre le diamètre interne du segment de guidage 19 et le diamètre de fond de gorge de maintien 20, permet au rotor 5 de tourner librement sur un diamètre sensiblement plus faible que celui sur lequel il tournerait avec une bague de centrage fixe sur le rotor 5 et en contact glissant sur la cloche 8.

Pour une charge radiale et un coefficient de frottement déterminés, la mise en oeuvre d'un diamètre de tourillon plus petit, réduit les contraintes et le couple résistant entre les pièces en mouvement. Ceci améliore le rendement du système. En outre, la vitesse de glissement relatif entre le segment de guidage 19 statique et le noyau fixe est réduite ce qui permet de baisser le niveau sonore global du produit.

La fonction de palier arrière du rotor est donc assurée par un segment de guidage 19 élastique monté sans serrage dans une gorge de maintien 20 réalisée sur le noyau fixe 11. Après montage, le diamètre externe dudit segment est sensiblement égal au diamètre interne de la cloche de contention 8.

Lorsque la température augmente, la dilatation du segment de guidage 19 peut être absorbée en grande partie par la fente 33. La variation de longueur de la circonférence moyenne du segment de guidage 19 liée aux variations de température, peut être absorbée dans l'espace libéré par la fente 33.

La fente 33 permet d'absorber la dilatation du segment de guidage 19 ce qui limite à la fois une augmentation du diamètre externe dudit segment et une diminution de son diamètre interne.

L'augmentation du diamètre externe pourrait donner naissance à des contraintes très importantes entre rotor 5 et la cloche de contention 8 et provoquer une déformation de la dite cloche.

Une diminution du diamètre interne pourrait être la cause d'une réduction du jeu résiduel entre le segment de guidage 19 et le rotor 5 et provoquer un blocage en rotation dudit rotor.

Ainsi, une dilatation du segment de guidage 19 peut être compensée par son élasticité naturelle et les contraintes internes du matériau utilisé peuvent alors se libérer en partie dans la zone d'ouverture prévue à cet effet. L'utilisation d'un segment de guidage 19 élastique permet de créer un palier auto-ajustable en fonction des dimensions des pièces en présence et des conditions de températures. A travers cette solution, le recentrage arrière du rotor 5 est assuré et le risque de blocage lié aux effets de la température est minimisé.

Par ailleurs, le contact entre le segment de guidage 19 et la cloche de contention 8 étant ici un contact statique, les exigences de résistance à l'abrasion qui pouvaient exister dans le cas d'un segment fixe sur le rotor et en rotation dans la cloche, n'existent plus dans notre application. Selon un mode de réalisation de l'invention, les contraintes exercées sur la cloche de contention 8 via le rotor 5 sont réduites. L'utilisation de matériau très résistant pour la réalisation de la cloche de contention 8 n'est plus nécessaire. Une cloche de contention qui était traditionnellement réalisée en inox, peut être réalisée dans un matériau plus facile à mettre en oeuvre tel qu'un alliage d'aluminium ou de cuivre.

Le fonctionnement de l'actionneur linéaire est le suivant :

Comme cela est représenté sur la figure 1, lorsque la vanne n'est pas en service, l'ensemble axe de commande mobile 1 et clapet 2 est maintenu en appui sur le siège de la bride 21 sous l'action d'un ressort de fermeture 12. Ledit ressort est alors détendu et le circuit du gaz est fermé. L'actionneur linéaire en position fermée est débrayé.

Durant la phase de démarrage ou d'armement, le rotor 5 est entraîné en rotation. Le clapet 2 étant en butée axiale sur la bride 21, la rotation du rotor 5 génère le vissage du noyau mobile 3 sur l'axe de commande mobile 1. Le noyau mobile 3 se déplace selon l'axe longitudinal de référence 100, en direction du noyau fixe 11 jusqu'à ce que les deux noyaux soient en contact. Le ressort de fermeture 12 est alors comprimé et ne peut s'opposer à l'action du moteur 10 sur le noyau mobile 3.

Une fois les deux noyaux 3, 11 en contact, lesdits noyaux sont alors positionnés dans l'entrefer 18. La bobine d'électroaimant 13 est mise sous tension et produit une force électromagnétique qui maintient en contact les deux noyaux et bloque en translation le noyau mobile 3. Le rotor 5 du moteur 10 est ensuite arrêté. La force électromagnétique exercée par l'électroaimant 13 est supérieure à celle Ff du ressort de fermeture 12. Ainsi, comme cela est représenté sur la figure 2, l'actionneur linéaire est alors toujours dans une position fermée mais se trouve embrayé ou armé.

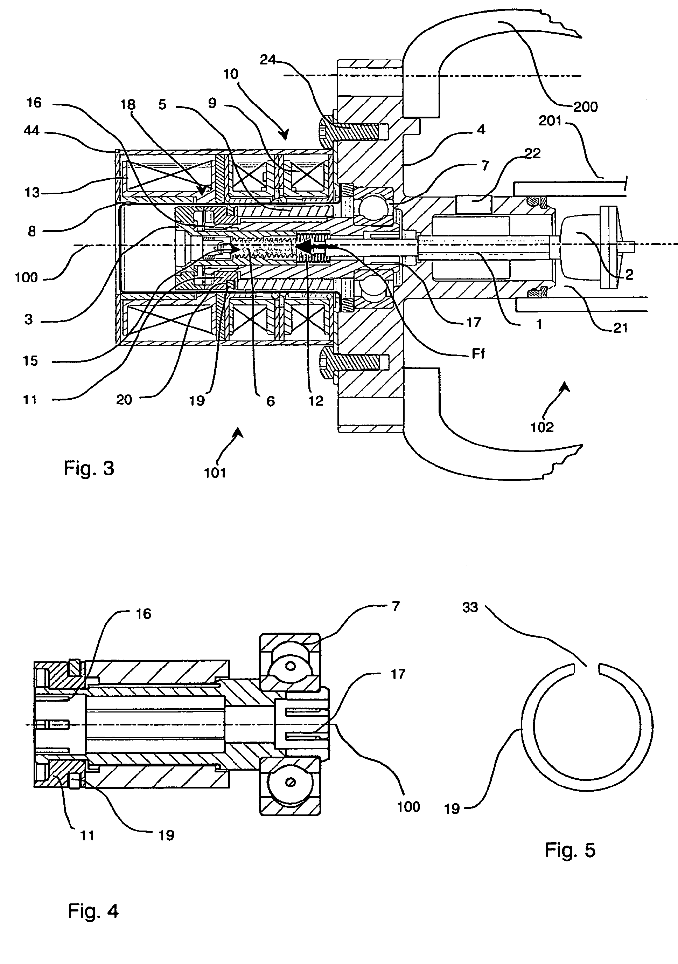

Afin de régler le débit de gaz, autrement dit régler la position du clapet 2 dans le conduit 201, le rotor 5 est à présent entraîné en rotation en sens inverse. La rotation du noyau fixe 11 entraîne celle du noyau mobile 3. Ledit noyau mobile étant bloqué en translation selon l'axe longitudinal de référence 100, sa rotation génère le dévissage de l'ensemble vis-écrou 15 et seul l'axe de commande mobile 1 se déplace en translation. Ce mouvement selon l'axe 100 provoque l'ouverture du clapet 2 par rapport au siège de la bride 21. Le clapet 2 en position ouverte est représenté sur la figure 3. L'actionneur linéaire est alors dans une position ouverte et armée.

En cas de coupure d'alimentation électrique, la force électromagnétique de l'électroaimant 13 devient nulle. Sous l'action de la force de fermeture Ff, le noyau mobile 3 peut se décoller du noyau fixe 11. Ce déplacement vers l'arrière du noyau mobile 3 provoque concomitamment celui de l'ensemble formé par l'axe de commande mobile 1 et du clapet 2 liés par l'ensemble vis écrou 15. Le déplacement de cet ensemble de pièces s'arrête lorsque le clapet 2 revient en contact avec le siège sur la bride 21. L'actionneur se retrouve dans la première position telle que représentée sur la figure 1. Il est donc fermé et débrayé. La circulation de gaz est alors interrompue.

## Revendications

1. Actionneur linéaire sécurisé comprenant :
- une tige de commande mobile (1) ayant une première extrémité destinée à être reliée à un clapet (2) d'une vanne, et une seconde extrémité reliée à un noyau mobile (3) par un ensemble vis-écrou (15), la tige de commande (1) bloquée en rotation étant libre de se déplacer selon un axe longitudinal de référence (100),
- un moteur (10) ayant un rotor (5) fixe en translation selon l'axe longitudinal de référence (100) et étant destiné à faire déplacer la tige de commande (1) via le noyau mobile (3), le noyau mobile (3) étant entraîné en rotation par le rotor (5) et pouvant se déplacer suivant l'axe longitudinal de référence (100), le rotor (5) ayant une partie avant côté clapet (2) et une partie arrière côté noyau mobile (3),
- des moyens de guidage (7) en rotation de la partie avant du rotor (5),
- un ressort de fermeture (12) tendant à éloigner le noyau mobile (3) du rotor (5) selon l'axe longitudinal de référence (100),
- un électroaimant (13) destiné à maintenir accolé le noyau mobile (3) à la partie arrière du rotor (5), et
- une cloche de contention (8) enveloppant le rotor (5), le ressort de fermeture (12), le noyau mobile (3) et l'ensemble vis-écrou (15),
**caractérisé en ce que** la partie arrière du rotor (5) est guidée en rotation dans la cloche de contention (8) au moyen d'un segment de guidage (19) ouvert, de forme annulaire non refermée comprenant une fente (33), positionné sur ladite partie arrière, le diamètre externe dudit segment étant sensiblement égal au diamètre interne de la cloche (8) et le diamètre interne du segment de guidage (19) étant sensiblement supérieur au diamètre externe de la partie arrière du rotor (5) sur laquelle il est positionné, de manière à laisser un jeu résiduel entre le rotor (5) et la cloche de contention (8).

2. Actionneur linéaire sécurisé selon la revendication 1 **caractérisé en ce que** le diamètre externe du segment de guidage (19) à l'état libre est supérieur au diamètre interne de la cloche de contention (8).

3. Actionneur linéaire sécurisé selon les revendications 1 ou 2 **caractérisé en ce que** le segment de guidage (19) est positionné à l'intérieur d'une gorge de maintien (20).

4. Actionneur linéaire sécurisé selon la revendication 3 **caractérisé en ce que** la gorge de maintien (20) est placée au niveau de la partie arrière du rotor (5).

5. Actionneur linéaire sécurisé selon la revendication 4 **caractérisé en ce que** la partie arrière du rotor (5) comporte un noyau fixe (11) dans lequel est placée la gorge de maintien (20).

6. Actionneur linéaire sécurisé selon l'une quelconque des revendications précédentes **caractérisé en ce** le noyau fixe (11) forme avec le noyau mobile (3), le noyau magnétique de l'électroaimant (13).

## Claims

1. A secured linear actuator comprising:
- a movable control rod (1) having a first end designed to be connected to a valve disc (2), and a second end connected to a moving plunger (3) by a nut and bolt assembly (15), the control rod (1) blocked in rotation being free to move along a reference longitudinal axis (100),
- a motor (10) having a rotor (5) fixed in translation along the reference longitudinal axis (100) and being designed to make the control rod (1) move via the moving plunger (3), the moving plunger (3) being driven in rotation by the rotor (5) and being able to move along the reference longitudinal axis (100), the rotor (5) having a front part on the side where the valve disc (2) is located and a rear part on the side where the moving plunger (3) is located,
- means (7) for guiding the front part of the rotor (5) in rotation,
- a closing spring (12) tending to urge the moving plunger (3) away from the rotor (5) along the reference longitudinal axis (100),
- an electromagnet (13) designed to keep the moving plunger (3) adjoined to the rear part of the rotor (5), and
- a retaining bell-housing (8) surrounding the rotor (5), closing spring (12), moving plunger (3) and nut and bolt assembly (15),
**characterized in that** the rear part of the rotor (5) is guided in rotation in the retaining bell-housing (8) by means of an open guiding segment (19) of non-closed annular shape comprising a slot (33), positioned on said rear part, the external diameter of said segment being substantially equal to the internal diameter of the bell-housing (8) and the internal diameter of the guiding segment (19) being substantially larger than the external diameter of the rear part of the rotor (5) on which it is positioned so as to leave a residual clearance between the rotor (5) and retaining bell-housing (8).

2. The secured linear actuator according to claim 1 **characterized in that** the external diameter of the guiding segment (19) in the free state is larger than the internal diameter of the retaining bell-housing (8).

3. The secured linear actuator according to claims 1 or 2 **characterized in that** the guiding segment (19) is positioned inside a retaining groove (20).

4. The secured linear actuator according to claim 3 **characterized in that** the retaining groove (20) is placed at the level of the rear part of the rotor (5).

5. The secured linear actuator according to claim 4 **characterized in that** the rear part of the rotor (5) comprises a fixed core (11) in which the retaining groove (20) is placed.

6. The secured linear actuator according to any one of the foregoing claims **characterized in that** the fixed core (11) in conjunction with the moving plunger (3) forms the magnetic core of the electromagnet (13).

## Patentansprüche

1. Linearer Sicherheits-Stellantrieb, umfassend
- einen beweglichen Antriebsstößel (1) mit einem ersten Ende zur Verbindung mit einer Klappe (2) eines Ventils sowie einem zweiten Ende, das über eine Spindel-Mutter-Anordnung (15) mit einem beweglichen Kern (3) verbunden ist, wobei der Antriebsstößel (1) verdrehfest, jedoch in einer Bezugslängsachse (100) axial beweglich angeordnet ist,
- einen Motor (10) mit einem Läufer (5), der in der Bezugslängsachse (100) axialfest angeordnet ist und dazu dient, den Antriebsstößel (1) mittels des beweglichen Kerns (3) zu verschieben, wobei der bewegliche Kern (3) durch den Läufer (5) drehwirksam mitgeführt wird und in Richtung der Bezugslängsachse (100) verschiebbar ist und der Läufer (5) ein der Klappe (2) zugewandtes vorderes Ende sowie ein dem beweglichen Kern (3) zugewandtes hinteres Ende aufweist,
- Führungsmittel (7) zur drehwirksamen Führung des vorderen Endes des Läufers (5),
- eine Schließfeder (12), deren Ziel ist, den beweglichen Kern (3) in der Bezugslängsachse (100) vom Läufer (5) zu entfernen,
- einen Elektromagneten (13), der dazu dient, den beweglichen Kern (3) in Anlage am hinteren Ende des Läufers (5) zu halten, sowie
- eine den Läufer (5), die Schließfeder (12), den beweglichen Kern (3) und die Spindel-Mutter-Anordnung (15) umschließende Verschlusskappe (8),
**dadurch gekennzeichnet, dass** das hintere Ende des Läufers (5) in der Verschlusskappe (8) durch ein, auf dem genannten hinteren Ende angeordnetes unterbrochenes, Führungselement (19), das ringförmig mit einem darin ausgebildeten Spalt (33) ist, drehwirksam geführt wird, wobei der Außendurchmesser des genannten Elements annähernd dem Innendurchmesser der Verschlusskappe (8) entspricht und der Innendurchmesser des Führungselements (19) geringfügig größer ist als der Außendurchmesser des hinteren Endes des Läufers (5), auf dem es angeordnet ist, derart dass zwischen Läufer (5) und Verschlusskappe (8) ein verbleibendes Spiel vorhanden ist.

2. Linearer Sicherheits-Stellantrieb nach Anspruch 1, **dadurch gekennzeichnet, dass** der Außendurchmesser des Führungselements (19) im ausgebauten Zustand größer ist als der Innendurchmesser der Verschlusskappe (8).

3. Linearer Sicherheits-Stellantrieb nach Anspruch 1 oder 2, **dadurch gekennzeichnet, dass** das Führungselement (19) in einer Haltenut (20) angeordnet ist.

4. Linearer Sicherheits-Stellantrieb nach Anspruch 3, **dadurch gekennzeichnet, dass** die Haltenut (20) am hinteren Ende des Läufers (5) ausgebildet ist.

5. Linearer Sicherheits-Stellantrieb nach Anspruch 4, **dadurch gekennzeichnet, dass** der Läufer (5) an seinem hinteren Ende einen feststehenden Kern (11) aufweist, in dem die Haltenut (20) ausgebildet ist.

6. Linearer Sicherheits-Stellantrieb nach irgendeinem der vorhergehenden Ansprüche, **dadurch gekennzeichnet, dass** der feststehende Kern (11) zusammen mit dem beweglichen Kern (3) den Magnetkern des Elektromagneten (13) bildet.
